Europäisches Patentamt

European Patent Office

Office européen des brevets

(11) Publication number: **0 498 491 A1**

## EUROPEAN PATENT APPLICATION

(21) Application number: **92200247.2**

(22) Date of filing: **29.01.92**

(51) Int. Cl.5: **G11B 23/087**

(30) Priority: **04.02.91 NL 9100190**

(43) Date of publication of application:
**12.08.92 Bulletin 92/33**

(84) Designated Contracting States:
**AT DE FR GB IT**

(71) Applicant: **N.V. Philips' Gloeilampenfabrieken**
**Groenewoudseweg 1**
**NL-5621 BA Eindhoven(NL)**

(72) Inventor: **Vollmann, Norbert Christian**
**c/o Int. Octrooibureau B.V., Prof. Holstlaan 6**
**NL-5656 AA Eindhoven(NL)**

(74) Representative: **Van Weele, Paul Johannes**
**Frits et al**
**INTERNATIONAAL OCTROOIBUREAU B.V.**
**Prof. Holstlaan 6**
**NL-5656 AA Eindhoven(NL)**

(54) **Magnetic-tape cassette.**

(57) A magnetic-tape cassette (1) comprises two movable tape guides (31, 33) arranged near a front side (37) of the magnetic-tape cassette and in the direct proximity of capstan openings (17, 19). After contact with a capstan (69, 71), which has moved one of the movable tape guides (31, 33) from a first position, situated near the front side, to a second position (57), situated at a greater distance from the front side, the magnetic tape (25) is guided with a smaller wrapping angle to a reel (27, 29) directly or *via* the movable tape guide (31, 33). This shortens the length of the tape path inside the magnetic-tape cassette.

FIG. 2

The invention relates to a magnetic-tape cassette comprising a housing having two parallel main walls interconnected by a plurality of transverse walls, one of said transverse walls constituting a front wall formed with two pressure-roller openings and one magnetic-head opening, at least one of said main walls having two capstan openings, which cassette further comprises two reels, tape guides and a magnetic tape, which magnetic tape has a coating side and a base side opposite the coating side and which magnetic tape is attached to both reels and wound at least partly onto one of the reels, a part of the magnetic tape along the magnetic-head opening and between the capstan openings and the front wall being kept out by the tape guides and the magnetic tape between the reels and said tape guides not being in contact with any parts of the cassette at least with its coating side and its base side.

Magnetic-tape cassettes are frequently used in systems such as, for example, the well-known Compact Cassette system laid down in IEC standard, publication number 94-7(1986), in which the cassettes cooperate with apparatuses. During this cooperation the magnetic tape is wound from one reel onto another reel, the tape being moved inside the cassette past an opening in the front wall of the cassette and being in contact with a magnetic head introduced partly into the cassette to read and write audio signals from/on the tape. For a correct operation it is essential that the magnetic tape is moved past the magnetic head with a constant speed and for a correct signal transfer the tape tension should not vary excessively in order to ensure a satisfactory contact between tape and head. In order to obtain a constant tape-transport speed this speed is not defined by the reel-drive spindles of the apparatus but the apparatus comprises capstans which drive the tape in the vicinity of the magnetic head. Therefore, the tape should be fed not only past the magnetic head but also past the capstans. Generally, these capstans are arranged at opposite sides of the magnetic head, so that the tape cannot be guided directly from the magnetic head to the reels but should first be led to the capstans over a distance along the front wall. In order to achieve this the cassette comprises tape guides situated in the front corners of the cassette, the wrapping angles of the tape around the guides being substantial. Since the friction between the tape and guides may give rise to irregularities such as stick-slip, it is advantageous to reduce this friction.

A magnetic-tape cassette of the type defined in the opening paragraph comprising means for improving the tape guidance is known from US 4,809,928. In order to obtain an improved tape guidance a separate element is arranged in the housing, which element comprises the principal tape guides for guiding the magnetic tape in the cassette. This element is arranged on positioning surfaces provided in the housing parts of the cassette. In this way it is possible to realise a cassette with suitably positioned tape guides, which may be manufactured from a higher grade material than the housing of the cassette. A disadvantage of this is that the cassettes become more expensive owing to the use of more expensive materials or more expensive production methods.

It is one of the objects of the invention to provide a cassette construction which enables a correct tape guidance to be obtained without stringent requirements being imposed on the cassette. To this end the magnetic-tape cassette in accordance with the invention is characterised in that said tape guides are movable between a first and a second position, in which first position the tape guide is situated near the front wall and the magnetic tape extends between the front wall and the capstan openings and in which second position the tape guides are spaced at a greater distance from the front wall than in the first position and, viewed in a direction perpendicular to the main wall, the magnetic tape extends at the location of the capstan openings. Instead of using tape guides of a high-grade material, which reduces the friction between tape and guide, the tape path is improved, in accordance with the invention, by reducing the wrapping angles around the tape guides, so that the friction between tape and guide decreases and the effect of the guide on the tape path is reduced. This is achieved by arranging the tape guide close to the capstan and withdrawing the tape guides from the front of the cassette in operational situations. This can be achieved in a simple way, so that both the cassettes and apparatuses can be simple and cheap. The tape guides must be movable because during insertion of the cassette into an apparatus the capstan should be disposed behind the magnetic tape. For this purpose the magnetic tape must be situated between the capstan opening and the front wall of the cassette. Moreover, there must be enough room to press a pressure roller against the magnetic tape at the location of the capstan. Viewed from the front wall, the tape guide should be moved back when the cassette is inside the apparatus. If instead of a movable tape guide near the capstan opening a fixed tape guide were arranged adjacent the capstan opening, the wrapping angle around the tape guide will hardly decrease because the tape path then extends too far into the corner of the cassette. An additional advantage of the cassette in accordance with the invention is that in operation the wrapping angle of the magnetic tape around the capstan is larger than in the prior-art cassettes, which reduces the likelihood of slip between the tape and the capstan and which improves the tape guidance.

United States Patent Specification 4,078,742 discloses a magnetic-tape cassette with tape guides situated near the magnetic-head opening at the front of the cassette. After it has been guided by these tape guides the magnetic tape is led directly to the reels. This provides a construction with a short tape path and small wrapping angles of the tape around the tape guides without the use of movable tape guides. However, this construction is possible only in cassettes in which the tape transport is provided exclusively by the reel-drive spindles without the use of capstans. If capstans had been used in this case they would have to be arranged adjacent the magnetic-head opening, so that the tape guides would have to be arranged near the corners of the cassette in order to guide the tape past the capstan. This would result in a cassette construction similar to that of the Compact Cassette with the same drawbacks as the Compact Cassette.

US 3,800,322 discloses another cassette construction for an improved tape guidance. It employs movable tape guides arranged in the cassette which guide the tape around openings provided in the cassette for the passage of tape transport means (capstans) and tape guides provided in the apparatus and which during cooperation with an apparatus are disengaged from the tape and bring the tape into contact with the tape guides and the capstan of the apparatus. As result of this, the requirements imposed on the accuracy of the cassette are not stringent because the tape guidance is then taken over almost completely by the tape guides of the apparatus. However, a drawback of this construction is that the apparatuses should comprise accurately positioned tape guides, which makes the apparatuses more expensive. In this known cassette construction further tape guides, which are constituted by the spindles of the movable tape guides, are disposed between the reels and the movable tape guides to tauten the tape across the front of the cassette. As a result of this, it is not possible to obtain a shorter tape path in the cassette and to reduce the wrapping angles around the tape guides. In order to obtain a shorter tape path and, consequently, smaller wrapping angles of the magnetic tape around the tape guides it is necessary that no further tape guides are disposed between the reels and the movable tape guides.

During the manufacture of the well-known Compact Cassette provided with blank magnetic tape a reel pre-wound with a magnetic tape is placed into the housing.

For cassettes provided with prerecorded magnetic tape another method is used. A leader tape is attached to the reels and the reels are placed into the housing. For loading with the prerecorded magnetic tape the leader tape is pulled out of the cassette *via* a pressure-roller opening and is unwound from the reels. Subsequently, the leader tape is severed after which one end is attached to a prerecorded magnetic tape. Now one reel is driven to wind the magnetic tape onto the reel in the housing. Finally, the end of the prerecorded magnetic tape is attached to the other end of the leader tape. An apparatus which enables the housing to be loaded with magnetic tape in known manner is known from United States Patent Specification 4,136,838. When the magnetic tape is thus loaded into the prior-art Compact Cassette the magnetic tape, before it is wound onto the reel, is guided to the reels by tape guides provided in the cassette. This guidance is attended with some friction between the magnetic tape and the tape guides. The speed with which the magnetic tape can be wound onto the reels is limited because the tension in the magnetic tape and the heat produced in the cassette should not become excessive. Moreover, variations in friction may result in a less uniform spool with the turns of the tape being offset.

In order to preclude the above problems an embodiment of the magnetic-tape cassette in accordance with the invention is characterised in that at least in the second position an opening is present between each movable tape guide and a bounding edge of the pressure-roller opening in the front wall, which bounding edge is remote from the magnetic-head opening, such that the magnetic tape can be wound from outside the housing onto the reel through the first-mentioned opening without coming into contact with any parts of the magnetic-tape cassette. Since the magnetic tape can now be wound directly onto the reel, without coming in contact with a tape guide in the cassette or other parts of the cassette it is possible to obtain higher winding speeds and a uniform spool.

United States Patent Specification 4,699,328 describes a method in which cassettes are loaded with magnetic tape and during winding the magnetic tape is also wound directly onto the reel without coming in contact with parts of the cassette. However, these cassettes do not have tape guides and during cooperation with the apparatus the magnetic tape is partly pulled out of the cassette and outside the cassette housing it is guided by tape guides provided in the apparatus.

A further embodiment of the magnetic-tape cassette in accordance with the invention is characterised in that the pressure-roller openings extend into at least the main wall formed with the capstan openings, the movable guide, viewed in a direction perpendicular to the main wall, being situated at the location of the pressure-roller opening in the main wall in the first position, and the movable guide, viewed in a direction perpendicular to the main wall, being situated outside said pressure-roller opening in the second position. A cassette in which the pressure-roller openings extend into the main walls is described in the not previously published Netherlands Patent Application number 9000348 (= PHN 13.018C, herewith incorporated by reference). As the movable tape guide is arranged in the cassette in the direct proximity of the capstan opening the movable tape guide in said cassette construction is situated at the location of the pressure-roller opening when the cassette does not cooperate with an apparatus, in order to ensure that the tape extends between the capstan opening and the front of the cassette and thus enable a capstan to engage behind the tape when the cassette is loaded into an apparatus. During cooperation with an apparatus a pressure roller is situated in the pressure-roller opening, so that the tape guide in the cassette should be disengageable from the pressure roller in order not to obstruct the tape-transport means.

For a further improvement of the tape guidance in the magnetic-tape cassette a further embodiment of the magnetic-tape cassette in accordance with the invention is characterised in that when the magnetic-tape cassette is present in an apparatus the magnetic tape between the capstan and the nearest reel is not in contact with the movable tape guide which is in its second position.

A further embodiment of the magnetic-tape cassette in accordance with the invention is characterised in that each movable tape guide is secured to an arm which is pivotable about a spindle, which arm is resiliently held in a position in which the movable tape guide occupies its first position. As a result of this, the magnetic tape is always situated between the capstan opening and the front wall when the cassette is outside the apparatus and when it is loaded into the apparatus, so that the capstan can always engage behind the magnetic tape. A suitable embodiment of such a magnetic-tape cassette is characterised in that the arm carries a resilient element which is in contact with parts of the magnetic-tape cassette.

During cooperation of the magnetic-tape cassette with an apparatus the movable tape guides are moved from the first position to the second position. This is effected, for example, as a result of the tension produced in the magnetic tape during operation, the magnetic tape moving the tape guides to their second positions against spring force. In order to obtain a reliable tape-guide movement during cooperation with an apparatus a further embodiment of the magnetic-tape cassette is characterised in that the movable tape guides are movable by means of capstans of an apparatus. A suitable embodiment by means of which this can be realised is characterised in that each arm carries a projection which, when the movable tape guide is in its first position, viewed in a direction perpendicular to the main wall, is situated at the location of the capstan opening, and when the magnetic-tape cassette is situated in an apparatus the movable tape guide, in its second position, is in contact with a capstan of the apparatus, which movable tape guide has been moved from its first position to its second position by the capstan via the projection.

The invention will now be described in more detail on the basis of an embodiment of the magnetic-tape cassette in accordance with the invention shown in the drawings. In the drawings:

Figure 1 shows an embodiment of the magnetic-tape cassette in accordance with the invention,

Figure 2 is a sectional view of the magnetic-tape cassette with the movable tape guides in a first position,

Figure 3 is a sectional view of the magnetic-tape cassette with the movable tape guides in a second position,

Figure 4 shows a part of the magnetic-tape cassette with tape-transport means of an apparatus,

Figure 5 shows a part of the magnetic-tape cassette with the movable tape guide in a second position, the tape guide being clear of the magnetic tape, and

Figure 6 shows a loading apparatus for magnetic tape on which a magnetic-tape cassette, shown in sectional view, is situated.

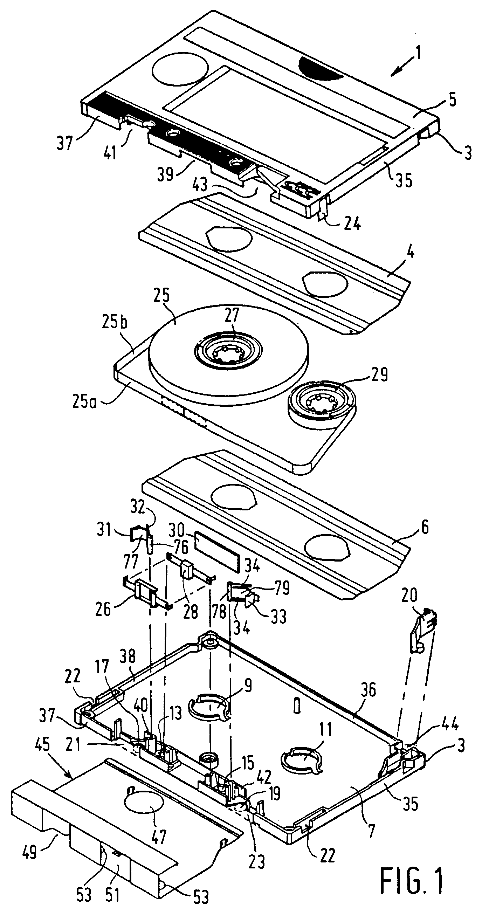

Fig. 1 shows an embodiment of the magnetic-tape cassette 1 in accordance with the invention. The magnetic-tape cassette has a housing 3 comprising two parallel main walls 5, 7, of which the lower main wall 7 has reel-drive openings 9, 11, locating apertures 13, 15, capstan openings 17, 19 and pressure-roller openings 21, 23 which extend into a front wall. These pressure-roller openings are necessary for the passage of pressure rollers which form part of an apparatus and whose height is larger than the thickness of the magnetic-tape cassette. The circular capstan opening (whose circumference is shown in broken lines) and the pressure-roller opening adjoin one another. The housing accommodates a magnetic tape 25, which is partly wound on two reels 27, 29 which are also arranged in the housing. The housing 3 further comprises transverse walls 35, 36, 37, 38, of which the wall 37 constitutes the front wall which has a central magnetic-head opening 39 and, at each side thereof, a pressure-roller opening 41, 43. The openings in the housing 3 can be closed by means of a sliding cover 45 having access openings 47, 49, 51, 53 which in an open position expose the openings 9, 41, 39 and 13 in the housing to allow the passage of a drive spindle, a pressure roller, a capstan, a magnetic head and locating pins of an apparatus.

The magnetic tape 25 has a coating side 25a where a magnetic coating is situated and a base side 25b which is in contact with two movable tape guides 31 and 33. The tape guides 31 and 33 are situated at ends of bent arms 77 and 79, which are pivotable about spindles 76 and 78. The arms further carry resilient elements 32 and 34, which are in contact with portions 40 and 42 of the housing 3. A pressure felt 28, which is mounted on a blade spring, and a resilient element, which carries further tape guides 26 for guiding the magnetic tape 25 past a magnetic head during operation, are situated near the magnetic-head opening 39. The cassette also has a shielding plate 30 for shielding the magnetic tape on the reels from a magnetic stray field produced by the magnetic head during operation.

Foils 4 and 6 are interposed between the reels 27, 29 and the main walls 5, 7 of the housing 3 to guide the magnetic tape 25 from and towards the reels and to ensure that the magnetic tape is correctly wound onto the reels.

The cassette 1 has two recesses 22 in the transverse walls 35 and 38, which recesses serve as snap-in recesses by means of which the cassette can be stored in a cassette holder. These recesses 22 are formed in both housing halves and for reasons of production engineering the rear walls of these recesses 22 are constituted by walls 24 forming part of only one of the housing halves. In its main wall 7 the cassette 1 further has an erase-protection aperture (not shown) which can be closed. This aperture can be closed by means of a slide mechanism 20. This slide mechanism 20 can be operated by the user. For this purpose the rear wall 36 of the housing 3 is formed with an opening 44 providing access to operate the slide mechanism 20.

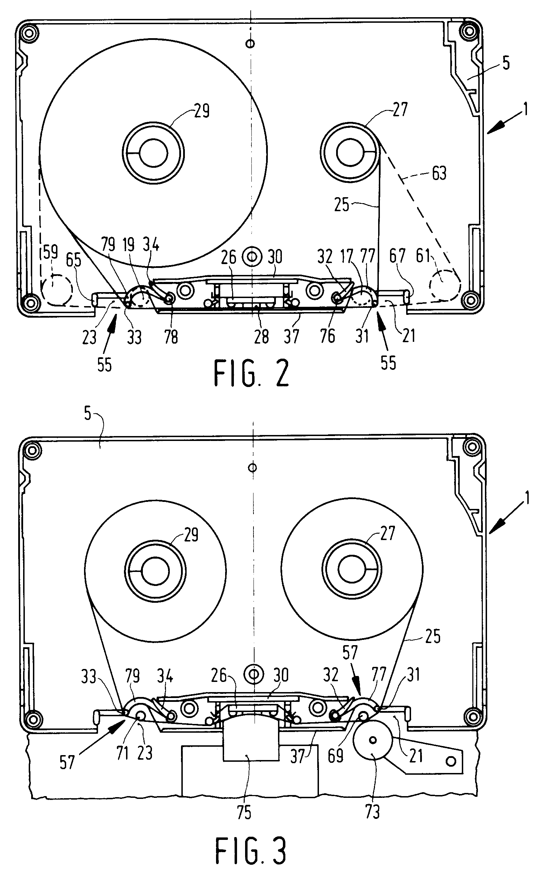

The movable tape guides 31 and 33 are movable between a first position 55 (see Fig. 2) and a second position 57 (see Fig. 3). In the first position 55 (Fig. 2) the movable tape guides 31, 33 are situated at the location of the pressure-roller openings 21, 23 near the front wall 37 of the magnetic-tape cassette 1 and in the direct proximity of the capstan openings 17, 19. In this position the movable tape guides guide the tape 25 around the capstan openings 17, 19, the magnetic tape then being situated between the capstan openings and the front wall 37. This is necessary to allow the tape to cooperate with tape-transport means of an apparatus, for which purpose a capstan must be situated behind the magnetic tape. For comparison a broken line indicates the tape path in the case that the prior-art tape guides 59, 61 of the Compact Cassette are used for guiding the magnetic tape. In that case the wrapping angles of the magnetic tape around the tape guides are substantially larger than with the tape path in accordance with the invention and the magnetic tape is also guided by further tape guides 65, 67, resulting in increased friction between magnetic tape and tape guides.

Fig. 3 shows the movable tape guides 31 and 33 in the second position 57 in an operational situation in which the magnetic-tape cassette 1 cooperates with an apparatus whose capstans 69 and 71, pressure roller 73 and magnetic head 75 are shown. In this position the tape guides are situated at a larger distance from the front wall 37 than in the first position, so that the wrapping angle is reduced. The tape guides are now situated outside the pressure-roller openings 21, 23 in the main wall and do not hinder the pressure roller 73 in this position.

In the present embodiment the tape guides 31 and 33 are moved from the first position (Fig. 2) to the second position (Fig. 3) by the force exerted on the tape guides by the magnetic tape 25. This force results from the tension produced in the magnetic tape in the operational situation by the transport of the magnetic tape. In the operational situation the tape guides 31 and 33 exert a force on the magnetic tape 25 *via* resilient elements 32 and 34 secured to arms 77 and 79, so that the tape guides also function as tape-tension controllers.

When the cassette 1 is removed from the apparatus blocking members secured to the sliding cover 45 block the reels 27 and 29 against rotation and the tape guides 31 and 33 move from the second to the first position, causing the magnetic tape 25 along the front wall 37 to be tautened. As a result of this the magnetic tape 25 also remains slightly pretensioned after removal from the apparatus.

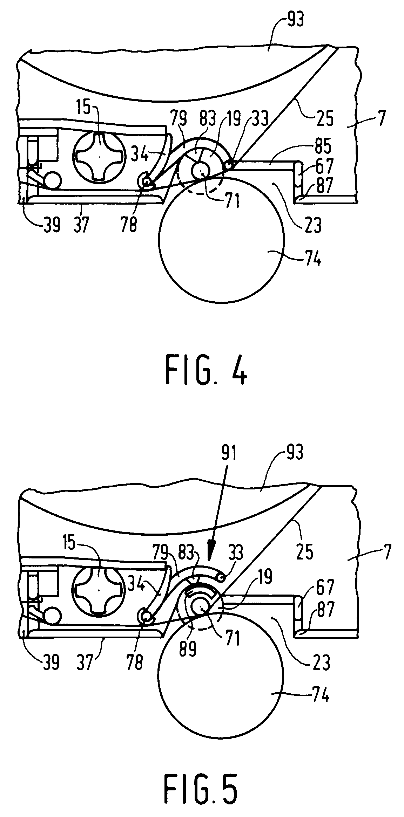

Figs. 4 and 5 show another construction for moving the tape guides 31 and 33. The movable tape guides are arranged on arms 77 and 79 which each comprise a projection 81, 83. The capstans have urged the projections away, as a result of which the tape guides are in the retracted second position. The projections 81 and 83 remain in contact with the capstans to scrape dirt from the capstans.

Both when the movable tape guides are in the first position and in the second position there is an opening between the tape guide and the bounding edge of the pressure-roller opening which is remote from the magnetic-head opening. Fig. 4 shows a part of the magnetic-tape cassette near one of these openings. The opening 85 extends between the movable tape guide 31 and the bounding edge 87 of the pressure-roller opening 21 which is remote from the magnetic-head opening 39. During the production of magnetic-tape cassettes with prerecorded magnetic tape the magnetic tape is wound from a location outside the housing onto one of the reels *via* a pressure-roller opening. The presence of the opening 85 makes this possible without the coating side 25a and the base side 25b of the magnetic tape coming into contact with any parts of the housing or with tape guides in the housing. This reduces the likelihood of damage to the magnetic tape and enables the tape to be wound onto the reels with a higher speed.

Fig. 5 shows that in a second position 91 the movable tape guide 31 can be out of contact with the magnetic tape 25. For this purpose an element 89 is arranged behind the capstan 71 in the apparatus and presses the projection 83 and thus the tape guide 31 further away from the front wall 37. Upon leaving the capstan 71 the magnetic tape 25 then goes directly to the spool 93 on the reel without contact with the tape guide 31 or any other parts of the magnetic-tape cassette.

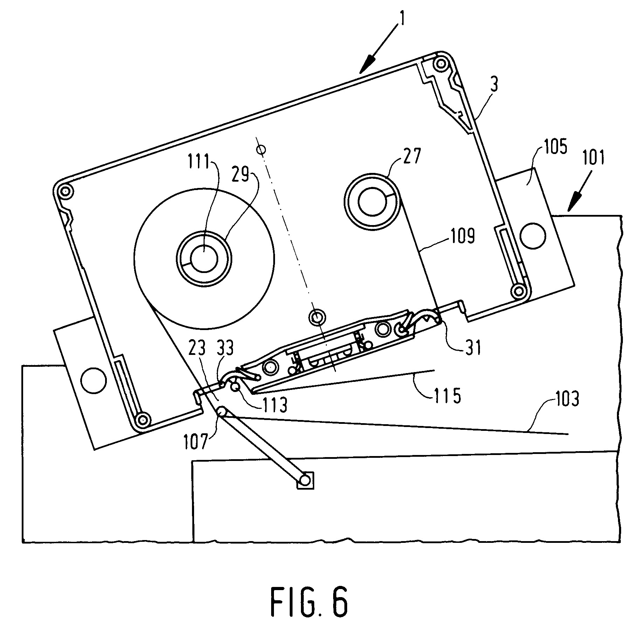

Fig. 6 shows parts of an apparatus 101 by means of which magnetic tape 103 can be loaded into the magnetic-tape cassette 1. For the sake of clarity the magnetic-tape cassette is shown in sectional view. The magnetic-tape cassette 1 is situated in a holder 105 in the apparatus 101. The leader tape 109 has been pulled out of the housing 3 by means of a movable threading pin 107 and has been severed by cutting means, not shown. One end of the leader tape is attached to the magnetic tape 103 and a drive spindle 111 has wound the magnetic tape onto the reel 27. The magnetic tape 103 is supplied by a supply spool on the apparatus. During loading the movable tape guide 33 is held in the second position by a pin 113 in the apparatus so that more room is available for the threading pin 107 at the location of the pressure-roller opening 23. Subsequently, the magnetic tape must be severed from the supply spool and connected to the other end 115 of the leader tape 109. In this way it is possible to load the magnetic-tape cassette not only with prerecorded magnetic tape but also with magnetic tape not provided with information.

It is to be noted that in the path between the reels 27, 29 and the movable tape guides 31, 33 the magnetic tape 25 should not contact any parts of the magnetic-tape cassette with its coating side 25a and its base side 25b. When the magnetic tape is loaded into the housing this would prevent the magnetic tape from being wound directly onto the reels without the magnetic tape coming into contact with the cassette with its coating side and its base side. The edges of the magnetic tape 25 will be in contact with the foils 4 and 6 for a correct take-up of the magnetic tape on the reel 29. If the magnetic tape is in contact with any further fixed tape guides between the reels and the movable tape guides this will cause the total wrapping angle of the magnetic tape around the tape guides to increase, resulting in a higher friction, which is undesirable for the lace-up, and in addition the reduction of the wrapping angle obtained by moving the movable tape guides from the first to the second position will be smaller.

Although the invention has been described by way of example for a new magnetic-tape cassette the invention is not limited to this example but covers every possible embodiment within the scope defined by the Claims. The basic idea of the invention of providing cassettes with movable tape guides in order to reduce the wrapping angle over which the tape is in contact with the tape guide can also be applied to existing cassettes, for example Compact Cassettes, or to other cassette constructions. It is also possible to use another construction for moving the movable tape guides, for example by means of a special actuating member provided in the apparatus. Moreover, it is also possible that in the first position the movable tape guide is situated outside the pressure-roller opening in the main wall, for example near the front wall directly adjacent the pressure-roller opening. As a result of this, the magnetic tape will extend along the entire pressure-roller opening in the front wall, so that no problems can occur if the movable tape guide cannot be moved owing to a defect.

**Claims**

1. A magnetic-tape cassette comprising a housing having two parallel main walls interconnected by a plurality of transverse walls, one of said transverse walls constituting a front wall formed with two pressure-roller openings and one magnetic-head opening, at least one of said main walls having two capstan openings, which cassette further comprises two reels, tape guides and a magnetic tape, which magnetic tape has a coating side and a base side opposite the coating side and which magnetic tape is attached to both reels and wound at least partly onto one of the reels, a part of the magnetic tape along the magnetic-head opening and between the capstan openings and the front wall being kept taut by the tape guides and the magnetic tape between the reels and said tape guides not being in contact with any parts of the cassette at least with its coating side and its base side, characterised in that said tape guides are movable between a first and a second position, in which first position the tape guide is situated near the front wall and the magnetic tape extends between the front wall and the capstan openings and in which second position the tape guides are spaced at a greater distance from the front wall than in the first position and, viewed in a direction perpendicular to the main wall, the magnetic tape extends at the location of the capstan openings.

2. A magnetic-tape cassette as claimed in Claim 1, characterised in that at least in the second position an opening is present between each movable tape guide and a bounding edge of the pressure-roller opening in the front wall, which bounding edge is remote from the magnetic-head opening, such that the magnetic tape can be wound from outside the housing onto the reel through the first-mentioned opening without coming into contact with any parts of the magnetic-tape cassette.

3. A magnetic-tape cassette as claimed in Claim 1 or 2, characterised in that the pressure-roller openings extend into at least the main wall formed with the capstan openings, the movable guide, viewed in a direction perpendicular to the main wall, being situated at the location of the pressure-roller opening in the main wall in the first position, and the movable guide, viewed in a direction perpendicular to the main wall, being situated outside said pressure-roller opening in the second position.

4. A magnetic-tape cassette as claimed in Claim 1, 2 or 3, characterised in that when the magnetic-tape cassette is present in an apparatus the magnetic tape between the capstan and the nearest reel is not in contact with the movable tape guide which is in its second position.

5. A magnetic-tape cassette as claimed in Claim 1, 2, 3 or 4, characterised in that each movable tape guide is secured to an arm which is pivotable about a spindle, which arm is resiliently held in a position in which the movable tape guide occupies its first position.

6. A magnetic-tape cassette as claimed in Claim 5, characterised in that the arm carries a resilient element which is in contact with parts of the magnetic-tape cassette.

7. A magnetic-tape cassette as claimed in Claim 5 or 6, characterised in that the movable tape guides are movable by means of capstans of an apparatus.

8. A magnetic-tape cassette as claimed in Claim 7, characterised in that each arm carries a projection which, when the movable tape guide is in its first position, viewed in a direction perpendicular to the main wall, is situated at the location of the capstan opening, and when the magnetic-tape cassette is situated in an apparatus the movable tape guide, in its second position, is in contact with a capstan of the apparatus, which movable tape guide has been moved from its first position to its second position by the capstan *via* the projection.

FIG. 1

FIG. 2

FIG. 3

FIG. 4

FIG.5

FIG. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A-712 536 (ELECTRIC & MUSICAL INDUSTRIES LTD. ) <br> * page 4, line 60 - page 5, line 3; figure 4 * <br> --- | 1,5,6 | G11B23/087 |
| A | DE-A-2 303 248 (AGFA-GEVAERT AG) <br> * page 4 - page 6; figures 1-3 * <br> --- | 1,5 | |
| A | US-A-4 337 909 (A.M.HARJA) <br> * figures 2-4 * <br> * abstract * <br> --- | 1,4,5 | |
| A | DE-A-3 521 326 (GRUNDIG EMV) <br> * claims 1-6; figure 1 * <br> --- | 1,5 | |
| A | WO-A-8 906 420 (EASTMAN KODAK) <br> * page 4, line 12 - page 5, line 29; figure 2 * <br> --- | 1 | |
| D,A | US-A-3 800 322 (K.SCHOETTLE ET AL) <br> --- | | |
| A | US-A-3 198 450 (F.C.SEIDEN) <br> --- | | TECHNICAL FIELDS SEARCHED (Int. Cl.5) |
| A | DE-A-2 707 804 (K.KAWACHI) <br><br> ----- | | G11B |

The present search report has been drawn up for all claims

| Place of search | Date of completion of the search | Examiner |
|---|---|---|
| THE HAGUE | 28 APRIL 1992 | DECLAT M.G. |

EPO FORM 1503 03.82 (P0401)